Europäisches Patentamt

(19) European Patent Office

Office européen des brevets

(11) Publication number: 0 145 279
A2

## (12) EUROPEAN PATENT APPLICATION

(21) Application number: 84307738.9

(22) Date of filing: 09.11.84

(51) Int. Cl.⁴: G 11 C 13/04
G 11 C 11/56

(30) Priority: 11.11.83 GB 8330101

(43) Date of publication of application:
19.06.85 Bulletin 85/25

(84) Designated Contracting States:
AT BE CH DE FR GB IT LI LU NL SE

(71) Applicant: COMTECH RESEARCH UNIT LIMITED
Bank of Bermuda Building
Hamilton 5-31(BM)

(72) Inventor: Gardner, Keith
1 Saint Laurence Road
Foxton Cambridgeshire CB2 6SF(GB)

(72) Inventor: Helfet, Peter Roy
8 Meadow Drive
London NW4 1SD(GB)

(72) Inventor: Longman, Robert J.
14 Saint John's Road
Coton Cambridge CB3 7PU(GB)

(72) Inventor: Pettigrew, Robert Martin
Pound Cottage High Street
Foxton Cambridgeshire CB2 6RP(GB)

(72) Inventor: Senensieb, Gideon
11 Lawrence Lea
Harston Cambridgeshire(GB)

(74) Representative: Abrams, Michael John et al,
HASELTINE LAKE & CO. Hazlitt House 28 Southampton
Buildings Chancery Lane
London WC2A 1AT(GB)

(54) Optical data storage.

(57) A method of optical data storage is disclosed which comprises encoding data into a code of order M, where M is an integer of 3 or greater, and writing the encoded data onto a receptive optical data storage medium using a laser system capable of generating (M-1) distinguishable pits in the surface of the receptive optical data storage medium. With such a method, the resultant data storage medium contains M different states, these being the lands together with the (M-1) pit states. The invention may be practiced using a plurality of lasers in order to generate the (M-1) pit states; alternatively, a single adjustable laser may be employed, e.g. one in which the intensity and/or wavelength and/or polarisation state of the laser beam may be modulated.

A writing system for effecting optical recordings is also disclosed, this sytem including a semi-conductor laser under control of an electronic circuit arranged to ensure that the current flowing through the semi-conductor laser is always greater than the threshold current at which light is emitted.

./...

Fig.1.

## OPTICAL DATA STORAGE

This invention relates to optical data storage and, more particularly but not exclusively, is concerned with a method of producing an optical recording on an optical data storage medium.

Optical data storage systems have been developed in which binary coded data is stored on an optical data storage medium by means of a writing laser whose beam is pulsed so as to alter the surface of the medium at regions where one binary state is to be stored, while leaving the surface unchanged in regions where the other binary state is to be stored. Individual regions of the surface which have been altered by the writing laser beam are referred to as pits, and individual regions of the surface which remain intact are referred to as lands. The data stored in this way may be recovered by making use of the difference between the optical reflection and/or transmission properties of pits and lands. The data storage density is usually limited by the optical resolution which can be achieved, but in theory it can also be limited by noise signals which arise from imperfections caused, for example, by the non-uniformity of the surface or by failure to achieve identical laser pulse energies as individual pits are produced in the writing process. Electrical noise in the electronic circuitry used in the writing and reading systems may also limit the data storage density.

Semiconductor lasers (laser diodes) are finding increasingly wide application in areas such as the writing of data onto optical data storage media. Laser diodes are highly efficient and can easily be used over a range of frequencies and pulse energies. They have the disadvantage, however, that precise control of the beam energy is difficult to achieve, so that repeatability of laser beam intensity from one pulse to the next is usually poor. This can represent a major limitation on data storage density.

The present invention proceeds from the appreciation that it is possible to generate a data storage system which is not restricted to a binary form, but can be ternary or of higher order. This is achieved by using pits and lands, as in conventional binary storage systems, but by having at least two mutually distinguishable forms of pit. More particularly, according to one aspect of the present invention, there is provided a method of optical data storage, which comprises (a) encoding the data which is to be stored into a code of order M, where M is an integer of three or greater; and (b) writing the encoded data onto a receptive optical data storage medium using a laser system capable of generating (M-1) distinguishable pits in the surface of the receptive optical data storage medium.

A data storage medium recorded by the technique as defined above contains M different states; these are represented by the (M-1) pit states together with the lands.

The laser system used to generate the M states in a receptive optical data storage medium can include a plurality of lasers having different characteristics such as to permit formation of (M-1) pit states. Alternatively, a single adjustable laser may be employed; with a single laser, it is necessary to modulate the intensity and/or wavelength and/or the polarisation state of the laser beam in order to generate the (M-1) pit states.

According to a second aspect of the invention, there is provided a method of producing an optical recording on an optical data storage medium using a laser writing system, in which the intensity and/or frequency of the laser beam is modulated through (M-1) reproducible levels in order to generate in the surface of the optical data storage medium (M-1) pit states.

The invention also provides a pre-recorded data storage medium in which the data is encoded into a code of order M, and in which the coded data is represented on the surface of the data storage medium by (M-1) pit states and lands.

Where the surface of an optical data storage medium has (M-1) pit states together with lands, a single region of the storage medium can store the equivalent of $\log_2 M$ binary digits. It will be appreciated that it is necessary to ensure that the beam energy of the writing laser system can be controlled accurately in order reproducibly to achieve M distinct states on the surface of the optical data storage medium.

According to a third aspect of the present invention the accurate control of the laser pulse energy can be effected by modulating the output of a continuous working laser. The modulation can be performed using an acousto-optic modulator on an electro-optic modulator or any other suitable modulating device. Alternatively if a data storage medium which is sensitive to a specific light polarisation is used then the polarisation state of the laser can be modulated by use of an electro-optic modulator for example. This will allow the (M-1) pit states to be recorded.

According to a further aspect of the present invention, there is provided a writing system for effecting optical recordings, which system includes a semiconductor laser under control of an electronic circuit which is arranged so as to ensure that the current flowing through the semicondcutor laser is always greater than the threshold current at which light is emitted. With such a control circuit, the severe transients caused by threshold crossing are not experienced, and this gives rise to more stable, repeatable operation. The circuit is preferably arranged so as to permit the laser to operate at (M-1) powers. Alternatively, the circuit may be arranged so as to cause the laser to operate at (M-1) wavelengths.

An optical data storage medium suitable for use in the present invention requires the use of an optical storage medium whose pitting characteristics are such that an increase in the pulse beam energy, or a decrease in the optical wavelength, or a change of the polarisation state, of the writing laser results in a gradual change of the reflective or transmissive properties of the medium in the energy and wavelength range of interest. It is undesirable for these properties to change very suddenly with pulse beam energy or wavelength; such large changes in properties would mean that small variations due to writing laser instability or non-uniformity in the optical storage material would give rise to large variations in the reflectivity or transmisivity of pits formed in the material. Such large variations would make it impossible to distinguish between the (M-1) different states of pitting. Data storage media suitable for use in the present invention are described and claimed in our European Patent Application No. 83305781.3.

In performing a method in accordance with the present invention, conventional techniques may be used to direct the writing laser beam onto the surface of the optical data storage medium. Suitable techniques are described, for example, in Optical Engineering, Sept/Oct 1982, vol.21 No.5, p.916.

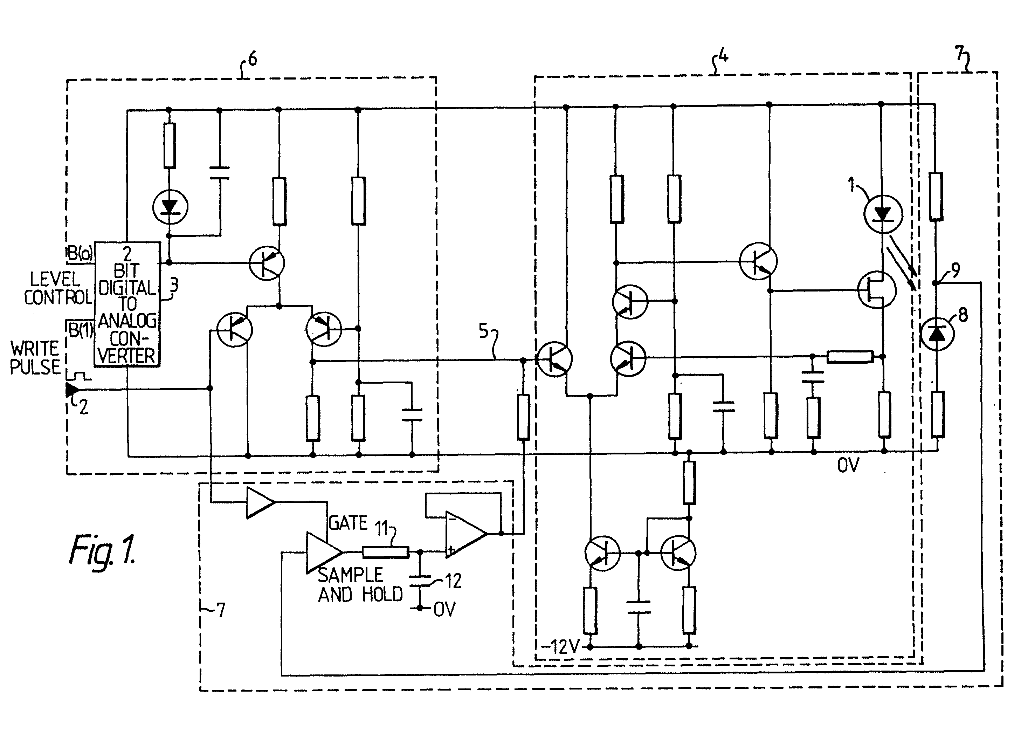

For a better understanding of the invention, and to show how the same may be carried into effect, reference will now be made, by way of example, to the accompanying drawing, which illustrates a presently preferred embodiment of control circuit for a semiconductor laser forming part of a writing system in accordance with the invention.

Referring now to the drawing, the laser driving circuit is suitable for recording data encoded in quaternary (M=4) code. A laser diode 1 is used as the writing laser and its beam energy is pulsed to form a pit on the optical storage medium (not shown) by a pulse of positive voltage at point 2. The intensity of the pulse and thereby the state of pitting produced in the optical storage medium is determined by the states of the binary inputs B(0) and B(1) of the digital-to-analog converter 3 at the instant the positive pulse is applied to point 2. Part 4 of the circuit drives a current through the laser diode 1 which current is proportional to the voltage at point 5. This is determined by the combination of the outputs of parts 6 and 7 of the circuit. Circuit part 6 produces an output voltage which is determined by the pulse amplitude required for pitting as described above. Circuit part 7 produces a bias output which ensures that the current flowing through laser diode 1 always exceeds the threshold current at which light is emitted.

Circuit part 7 operates as follows. A photodiode 8 is optically coupled to the laser diode 1. The voltage 1 at point 9 is sampled by the sample and hold circuit 10 during instants when no positive pulse is applied to point 2. The variations in the sampled voltage are damped by the action of resistor 11 and capacitor 12. The voltage across capacitor 12 is supplied to point 5 via voltage follower 13. When laser diode 1 emits no light, the photodiode 8 is off and the voltage at point 9 is high. This causes the voltage at point 5 to rise slowly which in turn causes the current though laser diode 1 to rise until the threshold current is exceeded and light begins to be emitted from laser diode 1. This emission of light begins to turn photodiode 8 on, and the voltage at point 9 falls thereby arresting a rise in the voltage at point 5. The net result is that circuit part 7 stabilises at a quiescent current which exceeds the threshold current of laser diode 1.

## Claims:

1. A method of optical data storage, which comprises (a) encoding the data which is to be stored into a code of order M, where M is an integer of 3 or greater; and (b) writing the encoded data onto a receptive optical data storage medium using a laser system capable of generating (M-1) distinguishable pits in the surface of the receptive optical data storage medium.

2. A method of producing an optical recording on an optical data storage medium using a laser writing system, in which the intensity and/or frequency of the laser beam is modulated through (M-1) reproducible levels in order to generate in the surface of the optical data storage medium (M-1) pit states.

3. A method according to claim 1 or 2, wherein there is used a laser system incorporating means for modulating the output of a continuous working laser.

4. A method according to claim 3, wherein the output of said laser is modulated using an acousto-optic modulator or an electro-optic modulator.

5. A method according to any preceding claim, in which there is used a data storage medium which is sensitive to the polarisation state of the write radiation, and wherein an electro-optic modulator is used to modulate the polarisation state of the laser system.

6. A method according to any preceding claim, wherein the laser system comprises a semi-conductor laser under control of an electronic circuit arranged to ensure that the current flowing through the semi-conductor laser is always greater than the threshold current at which light is emitted.

7. A writing system for effecting optical recordings, which system includes a semi-conductor laser under control of an electronic circuit which is arranged so as to ensure that the current flowing through the semi-conductor laser is always greater than the threshold

0145279

current at which light is emitted.

8. A method according to any one of claims 1 to 6, wherein the value of M is 4.

9. A pre-recorded data storage medium in which the data is encoded into a code of order M, and in which the coded data is represented on the surface of the data storage medium by (M-1) pit states and by lands.

Fig. 1.

0145279